# EUROPÄISCHE PATENTANMELDUNG

(11) **EP 2 893 799 A1**
(43) Veröffentlichungstag der Anmeldung: **15.07.2015**
(21) Anmeldenummer: 14197155.6
(22) Anmeldetag: 10.12.2014
(51) Int. Cl.: A01F 15/07

(54) **Landwirtschaftliche Rundballenpresse und Verfahren**

(30) Priorität: 13.01.2014 DE 102014200449
(71) Anmelder: DEERE & COMPANY, Moline, Illinois 61265-8098 (US)
(72) Erfinder: Gärtner, Jürgen, 67580 Hamm (DE); Ostermann, Philippe, 21000 Dijon (FR)
(74) Vertreter: Reichert, Christian

(57) **Zusammenfassung**

Es wird eine landwirtschaftliche Rundballenpresse (10) beschrieben. Die landwirtschaftliche Rundballenpresse (10) umfasst eine Aufnahme- und Zuführeinrichtung (18) für Erntegut, eine Presskammer (20) mit Presselementen zum Pressen von Erntegut und eine Wickel- oder Bindevorrichtung (50) zum Wickeln bzw. Binden eines gepressten Rundballens (28). Um eine Rundballenherstellung insgesamt produktiver zu gestalten wird vorgeschlagen, dass wenigstens die Presselemente während eines sich einem Pressvorgang anschließenden Wickel- bzw. Bindevorgangs mit höherer Laufgeschwindigkeit betreibbar sind als während des Pressvorgangs.

## Beschreibung

Die Erfindung betrifft eine landwirtschaftliche Rundballenpresse, mit einer Aufnahmeund Zuführeinrichtung für Erntegut, einer Presskammer mit Presselementen zum Pressen von Erntegut und einer Wickel- oder Bindevorrichtung zum Wickeln bzw. Binden eines gepressten Rundballens.

Landwirtschaftliche Rundballenpressen sind bekannt. Über eine Aufnahme- und Zuführeinheit wird auf dem Boden liegendes, gemähtes Erntegut in eine Presskammer der Rundballenpresse geleitet. Die Presskammer verfügt über Presselemente in Form von Rollen, Gürtel oder Kettenelemente, über die das in die Presskammer geförderte Erntegut in bekannter Weise zu einem Rundballen geformt wird. Dem eigentlichen Pressvorgang schließt sich ein Wickel- oder Bindevorgang an, in dem der geformte bzw. gepresste Rundballen mit einem Netz, einer Folie oder einem Garn umwickelt bzw. gebunden wird, sobald der Rundballen eine angestrebte bzw. eingestellte Größe erreicht hat. Die Aufnahme- und Zuführeinheit sowie das Antreiben der Presselemente erfolgt in der Regel über ein zentral angeordnetes Getriebe, welches von einer gemeinsamen Antriebswelle eines Zugfahrzeugs, beispielsweise der Zapfwelle eines Traktors oder landwirtschaftlichen Schleppers, oder einer Antriebswelle an einer selbstfahrenden Rundballenpresse, angetrieben wird. Das Getriebe betreibt einen ersten Antriebsstrang für die Aufnahme- und Zuführeinrichtung und einen weiteren Antriebsstrang für die Presselemente. Am Getriebe können dafür parallele Abtriebe für jeweils einen der Antriebsstränge vorgesehen sein. Die Antriebsstränge können jedoch in Reihe hintereinander angeordnet und mit nur einem Abtrieb des Getriebes angetrieben werden. Während des Wickel- bzw. Bindevorgangs wird die Aufnahme und Zufuhr von Erntegut unterbrochen, in der Regel dadurch, dass eine Fahrt über das Feld unterbrochen wird, so dass die Rundballenpresse zum Stehen kommt und kein weiteres Erntegut aufgenommen wird. Nachdem der Wickel- bzw. Bindevorgang beendet wird, wird der fertige Rundballen ausgeworfen und die Fahrt zur Aufnahme von neuem Erntegut wieder aufgenommen, so dass ein neuer Pressvorgang eingeleitet werden kann. Der gesamte Rundballenherstellungsprozess setzt sich demnach aus dem Pressvorgang, dem Wickel- bzw. Bindevorgang und dem Auswerfen des fertigen Rundballens zusammen, wobei ein nicht unerheblicher Zeitaufwand für den Wickel- bzw. Bindevorgang und zum Auswerfen des Rundballens aufgebracht werden muss oder mit anderen Worten, die Arbeitszeit und damit die Produktivität bei der Rundballenherstellung maßgeblich durch den Wickel- und Bindevorgang und durch das Auswerfen beeinflussbar ist.

Die der Erfindung zugrunde liegende Aufgabe wird darin gesehen, eine landwirtschaftliche Rundballenpresse der eingangs genannten Art anzugeben, durch welche eine Produktivitätssteigerung bei der Rundballenherstellung erzielbar ist.

Die Aufgabe wird erfindungsgemäß durch die Lehre des Patentanspruchs 1 und 7 gelöst. Weitere vorteilhafte Ausgestaltungen und Weiterbildungen der Erfindung gehen aus den Unteransprüchen hervor.

Erfindungsgemäß wird eine landwirtschaftliche Rundballenpresse der eingangs genannten Art derart ausgebildet, dass die Presselemente während eines sich einem Pressvorgang anschließenden Wickel- bzw. Bindevorgangs mit höherer Laufgeschwindigkeit betreibbar sind als während des Pressvorgangs. Durch Betreiben der Presselemente mit höherer Laufgeschwindigkeit, nachdem der Pressvorgang abgeschlossen ist, bzw. wenn der Wickel- bzw. Bindevorgang eingeleitet wird, rotiert der Rundballen während des Wickel- und Bindevorgangs entsprechend schneller als zuvor. Dadurch wird das Netz bzw. die Folie oder das Garn mit entsprechend höherer Rotationsgeschwindigkeit des Rundballens um denselben gewickelt bzw. gebunden, wodurch der Wickel- bzw. Bindevorgang maßgeblich verkürzt wird. Hierbei kann der Wickel- bzw. Bindevorgang beispielsweise mit doppelter Laufgeschwindigkeit der Presselemente durchgeführt werden, was den Wickel- und Bindevorgang um mehrere Sekunden verkürzen kann. Dies wiederum bedeutet eine deutliche Produktivitätssteigerung des gesamten Rundballenherstellungsprozesses.

Die Rundballenpresse kann einen ersten Antriebsstrang, zum Antreiben der Aufnahmeund Zuführeinrichtung, und einen zweiten Antriebsstrang, zum Antreiben der Presselemente umfassen, wobei eine höhere Laufgeschwindigkeit der Presselemente während des Wickel- bzw. Bindevorgangs durch eine Veränderung einer Antriebsübersetzung im zweiten Antriebsstrang erzielbar ist. Für eine derartige Veränderung der Antriebsübersetzung kann eine variable, mit mindestens zwei Schaltstufen ausgebildete Übersetzungseinheit beliebiger Art eingesetzt werden. So kann beispielsweise ein zwei- oder mehr-Gang Zahnradgetriebe, ein Planentengetriebe oder auch ein variabler Riementrieb eingesetzt werden. Auch der Antrieb über einen Elektromotor oder Hydraulikmotor ist denkbar, die in ihrer Drehzahl variabel sind und parallel zum ersten Antriebsstrang angeordnet sein können.

Die Rundballenpresse kann in einer weiteren Ausbildungsform eine Getriebeanordnung mit einem ersten Abtrieb für einen ersten Antriebsstrang, zum Antreiben der Aufnahmeund Zuführeinrichtung, und einem zweiten Abtrieb für einen zweiten Antriebsstrang, zum Antreiben der Presselemente umfassen, wobei eine höhere Laufgeschwindigkeit der Presselemente während des Wickel- bzw. Bindevorgangs durch eine Veränderung einer Antriebsübersetzung in der Getriebeanordnung oder im zweiten Antriebsstrang erzielbar ist. Hier kann beispielsweise von einer Antriebseinrichtung in Form eines variablen Verteilergetriebes ausgegangen werden, dessen Antriebswelle bzw. Eingangswelle beispielsweise direkt mit der Zapfwelle eines Schleppers in Verbindung steht und welches einen ersten und einen zweiten Abtrieb in Form einer ersten und zweiten Ausgangswelle besitzt, der den ersten bzw. zweiten Antriebsstrang antriebsmäßig versorgt. Nun kann, wie oben bereits zur Veränderung einer Antriebsübersetzung im zweiten Antriebsstrang beschrieben wurde, allein der zweite Antriebsstrang antriebsmäßig variiert werden, so dass während eines Wickel- bzw. Bindevorgangs der zweite Antriebsstrang mit höherer Drehzahl betrieben wird, wobei eine variable, mit mindestens zwei Schaltstufen ausgebildete Übersetzungseinheit beliebiger Art antriebsmäßig hinter dem eingesetzten Verteilergetriebe im zweiten Antriebsstrang angeordnet ist. Ferner ist es möglich, das eingesetzte Verteilergetriebe mit einer integrierten Schaltstufe für den zweiten Abtrieb vorzusehen, so dass durch einen Schaltvorgang der zweite Abtrieb drehzahlerhöht werden kann, während der erste Abtrieb mit unveränderter Drehzahl weiterläuft oder, in Verbindung mit der integrierten Schaltstufe oder auch auf andere Weise, gestoppt wird. Die Veränderung der Antriebsübersetzung im zweiten Antriebsstrang kann auch dadurch erzielt werden, dass beide Antriebsstränge durch eine variable Antriebseinrichtung in Form eines variablen Verteilergetriebes mit einem ersten und einem zweiten Abtrieb angetrieben werden, derart, dass mit Veränderung einer Antriebsübersetzung des Verteilergetriebes sowohl die Antriebsübersetzung für den ersten als auch für den zweiten Abtrieb gemeinsam erfolgt und damit im ersten als auch im zweiten Antriebsstrang eine Drehzahlerhöhung erzielt wird. Die mit dem ersten Antriebsstrang gekoppelte Aufnahme- und Zuführeinrichtung würde dann ebenfalls mit höherer Drehzahl angetrieben werden, was hinsichtlich Verschleiß und Energieverlust nicht von Vorteil wäre, da die Rundballenpresse während des Wickel- bzw. Bindevorgangs gestoppt wird und damit die Aufnahme- und Zuführeinrichtung auf der Stelle läuft, ohne produktiv zu sein. In der Gesamtbetrachtung für eine derart kombinierte Anordnung der Antriebe für die ersten und zweiten Antriebsstränge, kann sich diese Alternative jedoch auch als preisgünstiger und damit im Endeffekt auch wirtschaftlicher erweisen, da die Getriebeanordnung selbst möglicherweise einfacher konstruiert und kostengünstiger ist. Um einen Antrieb beider Antriebsstränge mit höherer Drehzahl zu vermeiden, kann beispielsweise auch eine Kupplung vorgesehen sein, die abtriebsseitig des ersten Abtriebs im ersten Antriebsstrang vorgesehen ist und im Falle einer gesamten Gangzahlerhöhung für die Getriebeanordnung geöffnet wird, um den ersten Antriebsstrang bei erhöhter Drehzahl vom ersten Abtrieb abzukoppeln, so dass zwar der erste Abtrieb ebenfalls mit erhöhter Drehzahl betrieben wird, jedoch der daran koppelbare erste Antriebsstrang von diesem losgekoppelt ist.

Die erwähnte Getriebeanordnung kann als Planetengetriebe ausgebildet sein, welches beispielsweise einen Antrieb über ein Sonnenrad, einen ersten Abtrieb über ein Hohlrad und einen zweiten Abtrieb über einen Planententräger des Plantengetriebes aufweist, wobei eine veränderbare Antriebsübersetzung durch Blockieren oder Bremsen einer Abtriebskomponente erzielbar ist. Als Abtriebskomponenten können beispielsweise das Hohlrad oder der Planetenträger des Planetengetriebes dienen, sofern der Antrieb über das Sonnenrad erfolgt. Beispielsweise kann durch Blockieren oder Bremsen des Hohlrades, welches mit dem ersten Antriebsstrang verbunden sein kann, der zweite Abtrieb, welcher mit dem Planetenträger in Verbindung steht, während des Wickel- bzw. Bindevorgangs in einer Antriebsübersetzung mit höherer Drehzahl betreibbar sein. Je nach Ausbildung der Antriebs- und Abtriebsbedingungen bzw. -vorgaben für die Rundballenpresse können Antrieb und Abtriebe auch in anderer Anordnung am Planetengetriebe angeordnet sein. Unabhängig vom Blockieren oder Bremsen einer Abtriebskomponente des Planetengetriebes ist hier, wie auch in anderen Kombinationsbeispielen, die Möglichkeit gegeben, den ersten Antriebsstrang während eines Wickel- bzw. Bindevorgangs durch Anordnung einer Kupplung vom ersten Abtrieb loszukoppeln, so dass die Aufnahme- und Zuführeinrichtung während des Wickel- bzw. Bindevorgangs, nicht betrieben bzw. gestoppt wird.

Ferner ist es möglich, dass die Getriebeanordnung ein Differentialgetriebe mit Differentialsperre umfasst, wobei eine veränderbare Antriebsübersetzung durch Aufheben der Differentialsperre in Verbindung mit einer Antriebssperre oder Antriebsbremse am ersten Abtrieb oder am ersten Antriebsstrang erzielbar ist. Die Antriebssperre oder Antriebsbremse kann dabei innerhalb eines Differenzialgetriebegehäuses oder auch außerhalb des Differentialgetriebegehäuses angeordnet sein. Durch die an sich bekannte Form und Ausbildung einer Differentialsperre im Differentialgetriebe können durch Aktivieren der Differentialsperre der erste und zweite Abtrieb direkt miteinander in Verbindung gebracht werden, wodurch eine Differentialbewegung zwischen dem ersten und zweiten Abtrieb unterbunden bzw. gesperrt wird. Bei aktivierter Differentialsperre erfolgt ein gleichmäßiger und gleichzeitiger Abtrieb über beide Abtriebe. Entsprechend umgekehrt kann durch Deaktivieren bzw. Lösen der Differentialsperre die direkte Verbindung zwischen dem ersten und dem zweiten Abtrieb aufgehoben werden, so dass Differentialbewegungen zugelassen sind. Bei deaktivierter Differentialsperre kann eine Differenzbewegung beider Abtriebe, also unterschiedliche Drehzahlen, durch das Differentialgetriebe aufgefangen werden, so dass beispielsweise einer der Abtriebe blockierbar oder abbremsbar ist, während der andere Abtrieb mit veränderter Drehzahl weiterdreht. So kann beispielsweise durch Blockieren oder Bremsen der ersten Antriebsverbindung oder des damit verbundenen ersten Abtriebs eine Veränderung der Antriebsübersetzung für den zweiten Antriebsstrang erzielt werden, sofern die Differentialsperre gleichzeitig aufgehoben bzw. deaktiviert ist.

Ferner wird ein Verfahren zur Herstellung von Rundballen mit einer landwirtschaftlichen Rundballenpresse vorgeschlagen, welchem die oben beschriebenen Ausbildungsformen zu Grunde gelegt werden, wobei wenigstens die Presselemente während eines sich einem Pressvorgang anschließenden Wickel- bzw. Bindevorgangs mit höherer Laufgeschwindigkeit betrieben werden als während des Pressvorgangs.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Rundballenpresse,
- Fig. 2: ein schematisches Schaubild für eine Ausführungsform einer Antriebsanordnung für eine Rundballenpresse gemäß Figur 1 mit einer Getriebeanordnung mit Verteilergetriebe,
- Fig. 3: ein schematisches Schaubild für eine weitere Ausführungsform einer Antriebsanordnung für eine Rundballenpresse gemäß Figur 1 mit einer Getriebeanordnung mit Verteilergetriebe und einer Übersetzungsstufe in einem Antriebsstrang,
- Fig. 4: ein schematisches Schaubild für eine weitere Ausführungsform einer Antriebsanordnung für eine Rundballenpresse gemäß Figur 1 mit einer Getriebeanordnung mit Planetengetriebe und
- Fig. 5: ein schematisches Schaubild für eine weitere Ausführungsform einer Antriebsanordnung für eine Rundballenpresse gemäß Figur 1 mit einer Getriebeanordnung mit Differentialgetriebe.

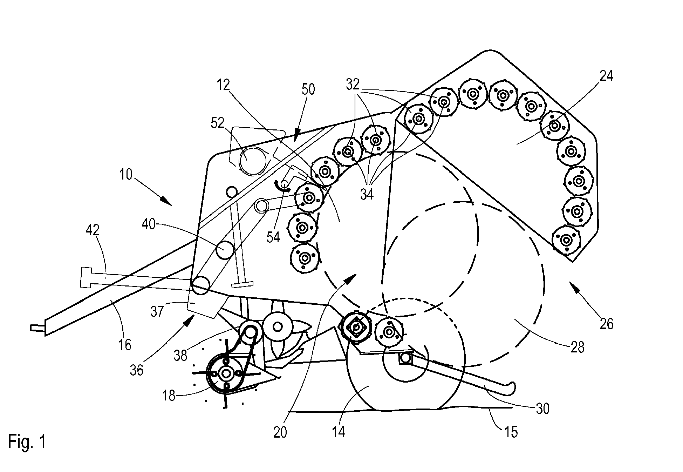

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An der in Vorwärtsfahrtrichtung vorderen unteren Seite des ersten Gehäuseteils 12 befindet sich in bekannter Weise eine Aufnahme- und Zuführeinrichtung 18 für Erntegut und in dem ersten Gehäuseteil 12 wird der vordere Teil eines Ballenpressraums 20 gebildet. An dem rückwärtigen oberen Eckbereich des ersten Gehäuseteils 12 befindet sich ein Lager 22 für ein schwenkbares zweites Gehäuseteil 24, das einen hinteren Teil des Ballenpressraums 20 umgibt. Das zweite Gehäuseteil 24 gibt im geöffneten Zustand einen Auslass 26 frei, durch welchen ein von der Rundballenpresse 10 gepresster Ballen 28 abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt eine Auslassklappe für einen im Ballenpressraum 20 gepressten Ballen 28 dar. Der Ballen 28 bewegt sich dabei in Richtung des Auslasses 26 und rollt dabei auf eine Abroll- oder Entladerampe 30, über welche der Ballen 28 auf die Boden 15 geleitet werden kann.

Die Rundballenpresse 10, mit größenunveränderlichem Ballenpressraum 20 ausgebildet, enthält eine Vielzahl zueinander parallel verlaufender Presselemente zum Pressen von Erntegut in Form von Pressrollen 32 (exemplarisch wurden hier nur einige wenige Pressrollen 32 mit dem Bezugszeichen "32" versehen), deren Rotationsachsen 34 bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlichen Ballenpressraum 20 bzw. als Ballenpresse mit variablem Ballenpressraum 20 ausgebildet werden, wobei die Presselemente dann ebenfalls in bekannter Weise als Riemen, Gurte oder Kettenanordnungen (nicht gezeigt) ausgebildet sein können.

Die Rundballenpresse 10 verfügt ferner über eine Antriebsanordnung 36 mit einer Getriebeanordnung 37, einem ersten Antriebsstrang 38 und einem zweiten Antriebsstrang 40. Eine Antriebswelle 42 ist mit einer Zapfwelle (nicht gezeigt) des Zugfahrzeugs oder Schleppers verbindbar und dient als Antrieb 44 für die Antriebsanordnung 36. Der erste Antriebsstrang 38 steht über einen ersten Abtrieb 46 und der zweite Antriebsstrang 40 über einen zweiten Abtrieb 48 der Getriebeanordnung 37 mit dieser in Antriebsverbindung. Der erste Antriebsstrang 38 treibt die Aufnahme- und Zuführeinrichtung 18 an, wobei der zweite Antriebsstrang 40 zum Antreiben der Pressrollen 32 vorgesehen ist. Die Antriebsstränge 38, 40 umfassen alle Antriebskomponenten, die in bekannter Weise in Rundballenpressen zum Antreiben der Aufnahme- und Zuführeinrichtung 18 bzw. zum Antreiben der Presselemente angeordnet sind und antriebsseitig mit dem ersten Abtrieb 46 bzw. dem zweiten Abtrieb 48 der Getriebeanordnung 37 verbunden sind.

Ferner umfasst die Rundballenpresse 10 eine Wickelvorrichtung 50, die mit einer Netz- oder Folienrolle 52 als Wickelmaterial bestückt ist. Die Wickelvorrichtung 50 umfasst eine Wickelmaterialzuführung 54, die das Wickelmaterial von der Netz- bzw. Folienrolle 52 in den Ballenpressraum 20 führt. An Stelle einer Wickelvorrichtung 50 kann auch eine Bindevorrichtung (nicht gezeigt) mit Bindegarn, ebenfalls in bekannter Weise, zum Einsatz kommen.

Während eines normalen Pressvorgangs werden der erste und der zweite Antriebsstrang 38, 40 über die Getriebeanordnung 37 bzw. über den Antrieb 44 und den Abtrieben 46, 48 parallel angetrieben, so dass die Aufnahme- und Zuführeinrichtung 18 als auch die Presselemente 32 zeitgleich mit konstantem Drehzahlverhältnis zueinander in Betrieb gehalten werden. Nachdem der eigentliche Pressvorgang, also die Erntegutaufnahme und Bildung des Rundballens 28 durch die Pressrollen 32, abgeschlossen ist, wird die Fahrt über den Boden 15 unterbrochen, da die Rundballenpresse 10 mit dem Rundballen 28 gefüllt ist und kein weiteres Erntegut mehr in der Ballenpressraum 20 aufgenommen werden soll bzw. kann. Zu dieser Zeit wird auch die Wickelvorrichtung 50 aktiviert, und ein sich dem Pressvorgang anschließender Wickel- bzw. Bindevorgang eingeleitet. Dabei wird durch eine anhaltende Drehung des sich im Ballenpressraum 20 befindlichen Rundballens das Wickelmaterial um den Rundballen 20 gewickelt. Nachdem ein Wickelvorgang abgeschlossen ist wird der Rundballen durch Öffnen der Auslassklappe 24 über die Entladerampe 30 auf dem Boden 15 abgelassen. Sodann wird die Fahrt mit der Rundballenpresse 10 wieder aufgenommen und ein neuer Pressvorgang beginnt. Die Drehzahl der Aufnahme- und Zuführeinrichtung 18 während der Erntegutaufnahme ist üblicherweise konstant und die Fahrtgeschwindigkeit der Rundballenpresse 10 wird angepasst, um nicht zu viel und nicht zu wenig Erntegut für eine optimale Erntegutaufnahme aufzunehmen. Die Erntegutaufnahme ist ferner auch durch konstruktive Merkmale der Presse und durch die Abmessungen eines Ernteguteinlasses begrenzt. Mit anderen Worten, die Aufnahme- und Zuführeinrichtung 18 kann nicht beliebig schnell Erntegut fördern, da es sonst zu Verstopfungen im Förderkanal der Rundballenpresse 10 kommen könnte. Um dennoch die Produktivität der Rundballenpresse 10 gegenüber herkömmlichen Rundballenpressen zu erhöhen, ist es bei der hier ausgebildeten Rundballenpresse 10 möglich, während des Wickel- bzw. Bindevorgangs die Presselemente bzw. Pressrollen 32 mit höherer Laufgeschwindigkeit zu betreiben. Sollte es sich um eine Rundballenpresse 10 mit variablem Ballenpressraum 20 handeln, würden entsprechend die Riemen, Gurte oder Kettenanordnungen mit höherer Laufgeschwindigkeit betrieben werden. Dies führt dazu, dass während des Wickel- bzw. Bindevorgangs der fertig gepresste Rundballen 20 mit höherer Geschwindigkeit gedreht wird bzw. rotiert, als noch während des Pressvorgangs. Dadurch wird auch das Wickel- bzw. Bindematerial schneller um den Rundballen 20 gewickelt und der Wickel- bzw. Bindevorgang kann deutliche verkürzt werden. Damit kann auch der Rundballen 20 früher ausgelassen bzw. abgelegt werden. Mit anderen Worten, die Standzeit der Rundballenpresse 10 ohne Fahrt über den Boden 15 wird deutlich verkürzt, und die Produktivität dadurch erhöht. Es können so mehr Rundballen 20 pro Zeiteinheit eingefahren werden.

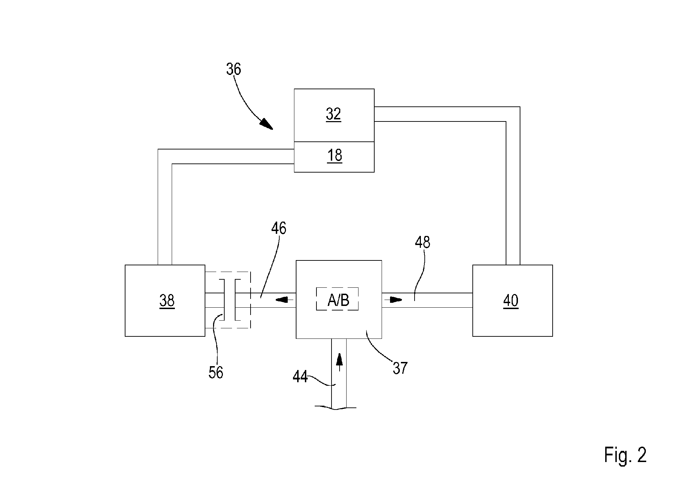

Um nun während eines sich einem Pressvorgang anschließenden Wickel- bzw. Bindevorgangs eine höhere Laufgeschwindigkeit der Presselemente zu ermöglichen werden verschiedene Ausführungsbeispiele vorgeschlagen, die anhand der schematischen Darstellungen der Antriebsanordnung 36 in den Figuren 2 bis 5 im Folgenden beschrieben werden.

In einem ersten Ausführungsbeispiel, siehe Figur 2, wird die Rundballenpresse 10 mit einem ersten Antriebsstrang 38, zum Antreiben der Aufnahme- und Zuführeinrichtung 18, und einen zweiten Antriebsstrang 40, zum Antreiben der Presselemente betrieben, wobei eine höhere Laufgeschwindigkeit der Presselemente während des Wickel- bzw. Bindevorgangs durch eine Veränderung der Drehzahl des zweiten Antriebsstrangs 40 erzielbar ist. Dazu ist die Getriebeanordnung 37 in einer ersten Schaltstufe mit niedriger Übersetzung (A) und einer weiteren Schaltstufe mit höherer Übersetzung (B) zum ersten und zweiten Abtrieb 46, 48 hin ausgebildet. So kann nach dem Pressvorgang in die zweite Schaltstufe geschaltet werden und die Pressrollen 32 mit höherer Geschwindigkeit betrieben werden. Da der erste und der zweite Antriebstrang 38, 40 bzw. der erste und zweite Abtrieb 46, 48 im festen Drehzahlverhältnis betrieben werden, dreht sich auch die Aufnahme- und Zuführeinrichtung 18 mit entsprechend höherer Geschwindigkeit. Dies ist für den Rundballenbildungsprozess jedoch bedeutungslos, da die Rundballenpresse steht und keine Fahrt über den Boden macht. Nachdem der Wickel- bzw. Bindeprozess abgeschlossen ist kann die Getriebeanordnung 37 wieder in die Schaltstufe mit niedriger Übersetzung geschaltet werden. Das Schalten kann in bekannter Weise durch elektrische oder hydraulische Stellmotoren erfolgen. Ferner kann zusätzlich im ersten Antriebsstrang 38 oder am ersten Abtrieb 46 eine Kupplung 56 vorgesehen sein, durch welche der erste Antriebsstrang 38 während des Wickel- bzw. Bindevorgangs vom ersten Abtrieb 46 der Getriebeanordnung 37 abkoppelbar ist. Dadurch kann der Verschleiß der Aufnahmeund Zuführeinrichtung 18 maßgeblich reduziert werden, da diese nicht während des Wickel- bzw. Bindevorgangs mitlaufen muss.

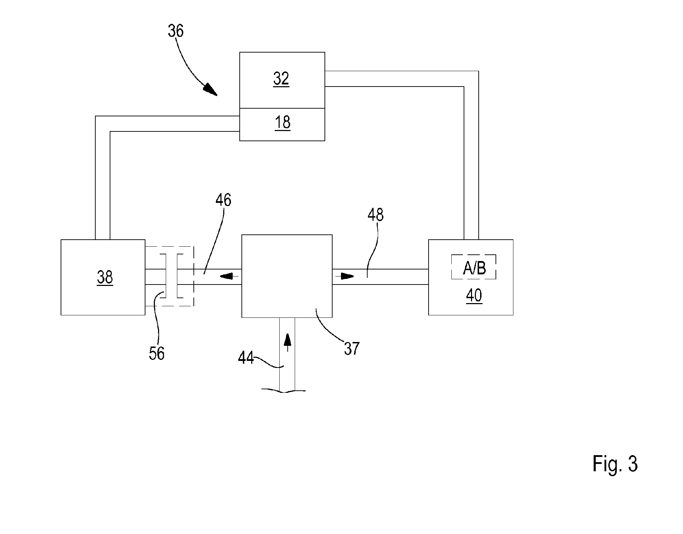

In einem weiteren Ausführungsbeispiel, siehe Figur 3, ist die Getriebeanordnung 37 als konstantes Verteilergetriebe ausgebildet, ohne Schaltstufen. Stattdessen ist im zweiten Antriebsstrang 40 eine Schaltstufe mit niedriger und eine weitere Schaltstufe mit hoher Übersetzung (A/B) vorgesehen, so dass in der niedrigen Schaltstufe der erste und der zweite Antriebsstrang 38, 40 mit gleicher Drehzahl angetrieben werden, hingegen in der hohen Übersetzung der zweite Antriebsstrang 40 gegenüber dem ersten Antriebsstrang 38 mit höherer Drehzahl betrieben werden kann. So kann nach dem Pressvorgang für den zweiten Antriebsstrang 40 in die zweite Schaltstufe geschaltet und die Pressrollen 32 mit höherer Geschwindigkeit betrieben werden, wobei hier zu erwähnen ist, dass der erste Antriebsstrang 38 dann nicht mit höherer Geschwindigkeit betrieben wird. Im Übrigen gleicht das Ausführungsbeispiel in Figur 3 dem Ausführungsbeispiel in Figur 2. Ferner kann auch hier aus oben genannten Gründen zusätzlich im ersten Antriebsstrang 38 oder am ersten Abtrieb 46 eine Kupplung 56 vorgesehen sein, um den Betrieb des ersten Antriebsstrangs 38 während des Wickel- bzw. Bindevorgangs einzustellen.

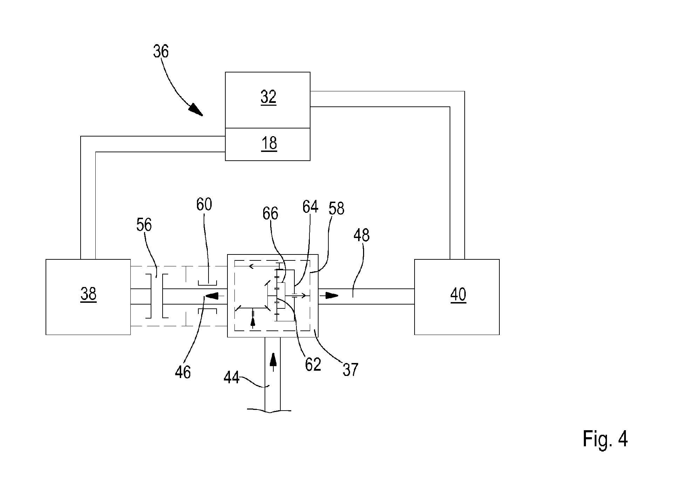

In einem weiteren Ausführungsbeispiel, siehe Figur 4, umfasst die Getriebeanordnung 37 ein Planetengetriebe 58 in Kombination mit einer Sperre oder Bremseinrichtung 60. Das Planetengetriebe 58 ist derart ausgebildet, dass ein Sonnenrad 62 mit dem Antrieb 44 verbunden ist und der erste Abtrieb 46 über ein Hohlrad 64 und der zweite Abtrieb 48 über einen Planetenträger 66 erfolgt. Die Sperre oder Bremseinrichtung 60 ist in dem in Figur 4 gezeigten Ausführungsbeispiel mit dem ersten Abtrieb 46 verbunden, wodurch das Hohlrad 64 sperrbar bzw. bremsbar ist. Bei gesperrtem bzw. gebremsten Hohlrad 64 erhöht sich die Drehzahl des Planetenträgers 66, so dass der erste Antriebsstrang 38 gestoppt bzw. mit geringerer Drehzahl betrieben und gleichzeitig der zweite Antriebsstrang 40 mit einer entsprechend höheren Drehzahl betrieben wird. Die Sperre bzw. Bremseinrichtung 60 kann alternativ auch im ersten Antriebsstrang 38 oder direkt am Hohlrad 64 angeordnet werden. Wie auch für die vorangegangenen Ausführungsbeispiele beschrieben, ist es hier möglich, den ersten Antriebsstrang 38 während eines Wickel- bzw. Bindevorgangs durch Anordnung einer Kupplung 56 vom ersten Abtrieb 46 loszukoppeln, so dass die Aufnahme- und Zuführeinrichtung 18 während des Wickel- bzw. Bindevorgangs, nicht betrieben bzw. gestoppt wird. In einem solchen Fall würde die Sperre bzw. Bremseinrichtung 60 zwischen dem Planetengetriebe 58 und dem ersten Antriebsstrang 38 angeordnet sein.

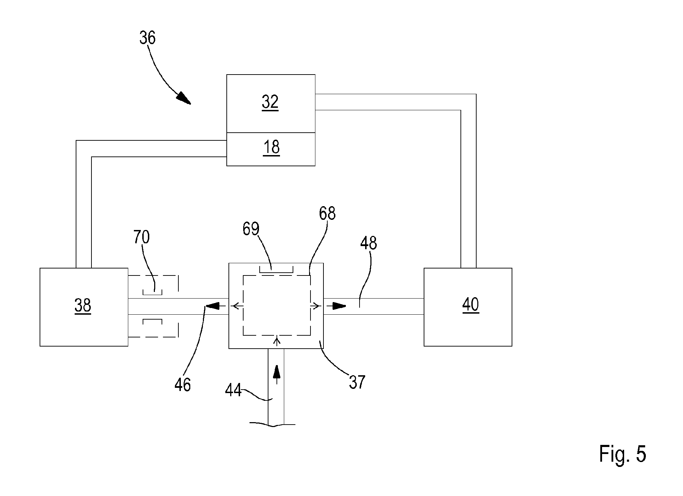

In einem weiteren Ausführungsbeispiel, siehe Figur 5, umfasst die Getriebeanordnung 37 ein Differentialgetriebe 68 mit integrierter Differentialsperre 69 in Kombination mit einer Sperre oder Bremseinrichtung 70 für den ersten Antriebsstrang 38 oder dem ersten Abtrieb 46. Das Differentialgetriebe 68 ist derart ausgebildet, dass bei aktivierter Differentialsperre 69 in einer für ein Differentialgetriebe 68 bekannten Art und Weise eine gleichmäßige Antriebsverteilung zum ersten und zweiten Abtrieb 46, 48 erfolgt. Bei deaktivierter Differentialsperre 69 erfolgt, entsprechend einer ebenfalls für ein Differentialgetriebe bekannten Art und Weise, eine Antriebsverteilung, die sich nach den an den Abtrieben 46, 48 wirkenden Abtriebsmomenten bzw. Abtriebsdrehzahlen richtet, so dass beispielsweise bei einem durch die Sperre oder Bremseinrichtung 70 blockiertem ersten Antriebsstrang 38 bzw. ersten Abtrieb 46, ein Antriebsfluss insgesamt bzw. vermehrt über den zweiten Antriebsstrang 40 bzw. zweiten Abtrieb 48 mit entsprechend höherer Drehzahl erfolgt. Entsprechend ist die Sperre oder Bremseinrichtung 70 in dem in Figur 5 gezeigten Ausführungsbeispiel mit dem ersten Abtrieb 46 oder mit dem ersten Antriebsstrang 38 verbunden.

Auch wenn die Erfindung anhand nur einiger ausgewählter Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliche Rundballenpresse (10), mit einer Aufnahme- und Zuführeinrichtung (18) für Erntegut, einer Presskammer (20) mit Presselementen zum Pressen von Erntegut und einer Wickel- oder Bindevorrichtung (50) zum Wickeln bzw. Binden eines gepressten Rundballens (28), **dadurch gekennzeichnet, dass** die Presselemente während eines sich einem Pressvorgang anschließenden Wickel- bzw. Bindevorgangs mit höherer Laufgeschwindigkeit betreibbar sind als während des Pressvorgangs.

2. Landwirtschaftliche Rundballenpresse (10) nach Anspruch 1, **gekennzeichnet durch** einen ersten Antriebsstrang (38), zum Antreiben der Aufnahme- und Zuführeinrichtung (18), und einen zweiten Antriebsstrang (40), zum Antreiben der Presselemente, wobei eine höhere Laufgeschwindigkeit der Presselemente während des Wickel- bzw. Bindevorgangs **durch** eine Veränderung einer Antriebsübersetzung im zweiten Antriebsstrang (40) erzielbar ist.

3. Landwirtschaftliche Rundballenpresse (10) nach Anspruch 1, **gekennzeichnet durch** eine Getriebeanordnung (37) mit einem ersten Abtrieb (46) für einen ersten Antriebsstrang (38), zum Antreiben der Aufnahme- und Zuführeinrichtung (18), und einem zweiten Abtrieb (48) für einen zweiten Antriebsstrang (40), zum Antreiben der Presselemente, wobei eine höhere Laufgeschwindigkeit der Presselemente während des Wickel- bzw. Bindevorgangs **durch** eine Veränderung einer Antriebsübersetzung für den zweiten Abtrieb (48) der Getriebeanordnung oder im zweiten Antriebsstrang (40) erzielbar ist.

4. Landwirtschaftliche Rundballenpresse (10) nach Anspruch 3, **dadurch gekennzeichnet, dass** die Getriebeanordnung (37) ein Planetengetriebe (58) umfasst, wobei der zweite Abtrieb (48) während des Wickel- bzw. Bindevorgangs in einer Antriebsübersetzung mit höherer Drehzahl betreibbar ist.

5. Landwirtschaftliche Rundballenpresse (10) nach Anspruch 3 oder 4, **dadurch gekennzeichnet, dass** eine Kupplung (56) vorgesehen ist, mit welcher der erste Antriebsstrang (38) von der Getriebeanordnung (37) trennbar ist.

6. Landwirtschaftliche Rundballenpresse (10) nach Anspruch 3, **dadurch gekennzeichnet, dass** die Getriebeanordnung (37) ein Differentialgetriebe (68) mit Differentialsperre umfasst, wobei eine veränderbare Antriebsübersetzung durch Aufheben der Differentialsperre in Verbindung mit einer Antriebssperre (70) am ersten Abtrieb (46) oder am ersten Antriebsstrang (38) erzielbar ist.

7. Verfahren zur Herstellung von Rundballen (28) mit einer landwirtschaftlichen Rundballenpresse (10) nach einem oder mehreren der vorangehenden Ansprüche, wobei wenigstens die Presselemente während eines sich einem Pressvorgang anschließenden Wickel- bzw. Bindevorgangs mit höherer Laufgeschwindigkeit betrieben werden als während des Pressvorgangs.
